# EUROPEAN PATENT APPLICATION

(11) **EP 4 807 825 A1**
(43) Date of publication of application: **16.09.2026**
(21) Application number: 25163129.7
(22) Date of filing: 12.03.2025
(51) Int. Cl.: H01M 8/10, H01M 4/92, H01M 4/88

(54) **METHOD FOR THE MANUFACTURE OF A CATALYST-CONTAINING ELECTRODE LAYER**

(71) Applicant: Carl Freudenberg KG, 69469 Weinheim (DE)
(72) Inventor: BURGER, Thomas, 85399 Hallbergmoos (DE); BRETZLER, Patrick, 82140 Olching (DE); JURZINSKY, Tilman, 81735 München (DE); STEFENER, Manfred, 81735 München (DE)

(57) **Abstract**

The present invention is directed to a method for producing a catalyst-containing electrode layer on a substrate, in particular a catalyst layer for fuel cells, electrolysers, or other chemical or electrochemical reactors.

The method comprises the following steps:
(A) generating an electrode layer on the substrate, wherein the electrode layer contains support particles for the catalyst to be generated thereof;
and simultaneously or subsequently:
(B) generating the catalyst on at least one part of the support particles present in the electrode layer generated according to step (A) with decomposition of a catalyst precursor present in the electrode layer and not merely at the surface,
wherein the support particles and/or the catalyst precursor is/are applied on the substrate via a two-dimensional, film-like application method.

## Description

### BACKGROUND OF THE INVENTION

The present invention relates to a method for producing a catalyst-containing electrode layer on a substrate, in particular a catalyst layer for fuel cells, electrolysers, or other chemical or electrochemical reactors.

### DESCRIPTION OF THE PRIOR ART

Such catalyst-containing electrode layers or catalyst layers are an essential component of a so-called membrane-electrode unit of all types of fuel cells, but are also required, for example, in electrolysers or generally in other chemical or electrochemical reactors. For example, the membrane-electrode unit of a fuel cell consists of a sandwich-like structure comprising a first electrode layer forming the cathode, a membrane and then a second electrode layer forming the anode. So-called gas diffusion layers are then arranged on both sides of the membrane-electrode unit of a fuel cell, through which the necessary fuels (e.g. methanol or hydrogen) and the oxidizing agent (e.g. oxygen/air), respectively, can be supplied to the membrane-electrode unit during operation of the fuel cell and the products resulting from the electrochemical fuel conversion can be removed again. In the area of the electrodes, the presence and optimised distribution of a catalyst that promotes fuel conversion is essential. In this respect, different requirements apply to the anode and cathode, which is why different catalysts can be used for the electrode layers in question.

In a first previously known manufacturing process for electrode layers containing catalysts, the use of so-called supported catalyst particles is used, which are added to a paste used to produce the electrode layer with other components. The supported catalyst particles were often formed by carbon particles acting as support particles, on which at least some of the catalyst material was deposited, e.g. by means of a chemical generation process. For this purpose, a solution is first prepared from the support particles and a catalyst precursor. The catalyst precursor is then decomposed in a suitable manner, whereby the generated catalyst material is finally deposited onto the support particles. However, the use of a supported catalyst synthesised in this way in a paste used to produce an electrode layer is associated with disadvantages. In particular, the generated catalyst in an electrode layer produced from a corresponding paste is not only located at those points within the electrode layer where a catalyst presence is actually necessary, which ultimately results in a very high and inefficient - and therefore uneconomical - loading of the electrode layer with partially unusable catalyst material.

However, since the use of a supported catalyst is advantageous in principle, e.g. due to the possibility of providing a very high active surface area for the catalyst, other ways of producing catalyst-containing electrode layers or catalyst layers were pursued as development progressed, some of which are still state of the art today.

This includes, for example, different variants of the electrochemical deposition/generation process described in US 5,084,144, DE 19720688 C1, EP 1307939 B1 or EP 1391001 B1. According to the processes from the last two cited European patent specifications, a precursor layer containing the catalyst material in the form of a catalyst precursor (e.g. a salt containing the catalyst) is first provided on a membrane and the catalyst is then generated therein by electrochemical means, i.e. with external provision of an electric current, an electric voltage or an electric field. This can significantly reduce the required quantity of the catalyst used, which is usually very expensive, as the electrochemical deposition process is advantageously only carried out in the area of the so-called "three-phases boundary", where electronic and ionic conductivity is present in addition to a contact with the process media supplied to the fuel cell - which is ideal for the efficiency of fuel conversion during operation of a fuel cell or other chemical or electrochemical reactor. A disadvantage in this respect, however, is the high level of equipment required, in which the layers to be produced must be electrically contacted, particularly in a suitable sample chamber. Furthermore, the membrane must be kept moist during the electrochemical deposition process in a suitable manner (e.g. using water or water vapour), in order to maintain the level of electrical conductivity required for the deposition process.

Another previously known further development of this process is described in WO 2008/104322 A2. In this method, a structured electrode layer is first produced and then - again electrochemically - the catalyst is generated on carbon particles present in the structured layer, which act as a support for the catalyst. In this respect too, however, a suitable conductivity of the membrane must be ensured during the electrochemical deposition process and the provision of an external electrical voltage, an external electrical current or an electrical field generated by suitable means is a mandatory prerequisite for carrying out the process described.

Another previously known process for catalyst synthesis is known as the "impregnation method", in which a catalyst support, usually a suitable industrial carbon black, is mixed with a solution (aqueous or non-aqueous) containing a catalyst precursor so that the surface of the catalyst support can be coated with the catalyst precursor. The depleted solution is then either filtered off or evaporated, and the supported catalyst is then produced by chemical reduction. Here, too, only a supported catalyst is produced, which - as already mentioned above - must be added to a suitable electrode layer paste. This also results in an inefficient distribution of the catalyst within the entire electrode layer.

Furthermore, DE 10 2007 033 753 A1 discloses a method in which a catalyst coating is applied to a gas diffusion electrode in such a way that an aqueous precursor solution is applied to a conductive, ultrahydrophobic substrate and the catalyst is then chemically or preferably electrochemically deposited. Obviously, only a superficial generation of the catalyst takes place. Although this results in a comparatively low platinum consumption, only a low catalytic activity or performance can be achieved overall with a gas diffusion electrode produced in this way in a membrane electrode unit.

**In** addition, DE 100 47 935 A1 shows an electrode for a fuel cell comprising a polymer-solid electrolyte-catalyst composite electrode containing a cation exchange resin, carbon particles and catalyst metal, in which the catalyst metal is mainly charged to a location where a surface of the carbon particles comes into contact with a proton-conducting channel in the resin. For this purpose, the initially produced electrode layer must be soaked in a solution containing the catalyst (e.g. platinum) for an extraordinarily long period of 2 days, so that the ion exchange process required for the targeted deposition of the catalyst, which takes place over long time scales can take place. On the one hand, this leads to catalyst or metal particles being generated at the ends of ion exchange channels in the desired sense. On the other hand, however, catalyst compounds also adhere to the inside of the proton-conducting channels of the cation exchange resin (i.e. at points where the catalyst is inactive and/or at points that block or hinder media contact with catalyst particles located in the same proton-conducting channel during subsequent operation of a fuel cell). This is why the electrode must be washed in a thorough washing step, e.g. with deionised water, after the lengthy soaking with the precursor solution, as a result of which a significant proportion of the catalyst is removed from the layer again.

Finally, WO 2011/054500 A1 relates to a method for generating a catalyst-containing electrode layer on a substrate, particularly a catalyst layer for fuel cells or other chemical or electrochemical reactors, comprising the steps of (A) generating an electrode layer on the substrate, wherein the electrode layer contains support particles for the catalyst to be generated thereon, and simultaneously or subsequently (B) generating the catalyst on at least a portion of the support particles present in the electrode layer generated according to step (A) with decomposition of a catalyst precursor, wherein no washing step takes place that could cause a discharge of the catalyst from the layer. In WO 2011/054500 A1, impregnation of the electrode layer containing support particles with a solution containing a catalyst precursor is carried out by dripping or spraying the solution on the electrode layer. Alternatively, an electrode layer paste containing support particles and the catalyst precursor is applied on the substrate by spraying or by inkjet coating.

Against this background, it is an object of the present invention to provide a new process for producing a catalyst-containing electrode layer on a substrate, in particular a catalyst layer for fuel cells or other chemical or electrochemical reactors, which can be carried out cost-effectively and quickly with simultaneously good catalyst utilisation and distribution, and which has further advantages which are explained in more detail below.

### SUMMARY OF THE INVENTION

The above referred object is solved by a method as defined in claim 1. Accordingly, the present invention provides a method for the manufacture of a catalyst-containing electrode layer on a substrate comprising the following steps:
(A) generating an electrode layer on the substrate, wherein the electrode layer contains support particles for the catalyst to be generated thereon;
   and simultaneously or subsequently:
(B) generating the catalyst on at least one part of the support particles present in the electrode layer generated according to step (A) with decomposition of a catalyst precursor present in the electrode layer and not merely at the surface,
wherein the support particles and/or the catalyst precursor is/are applied on the substrate via a two-dimensional, film-like application method.

Advantageous embodiments of the invention are defined in the dependent claims.

In the context of the present invention, an efficient and at the same time cost-effective generation of the catalyst on the support particles present in an electrode layer is possible with low catalyst input. The catalyst layers produced using the process according to the invention exhibit favourable properties, particularly with regard to the given catalyst utilisation.

It has been surprisingly found that applying the support particles and/or the catalyst precursor on the substrate via a two-dimensional, film-like application method provides an improvement over the prior art, in particular over WO 2011/054500 A1. It has been surprisingly found that the method according to the present invention allows a simple scaling in continuous processes, a uniform application, the use of a reduced application volume as well a more flexible media selection. Finally, the method of the present invention prevents the loss of impregnating solution due to mist or satellite drops as well as clogging and an energy input into the impregnation solution, as caused by some printing or spraying techniques.

A further advantage of the present invention is that the generation of the catalyst within the previously or simultaneously produced electrode layer essentially only takes place at those points which are accessible to the process media during subsequent operation of a fuel cell (or other chemical or electrochemical reactor). The generation of the catalyst not only on the surface of the electrode layer ensures that deeper layers of the electrode are also catalytically active, which means that significantly more powerful membrane electrode units can be achieved compared to the prior art known from DE 10 2007 033 753 A1, for example.

The integration of a - non-electrochemical - generation process of the catalyst (e.g. by chemical and/or thermal reduction of a catalyst precursor) into the manufacturing process of the final product (e.g. the manufacture of a membrane electrode unit for a fuel cell) realised with an embodiment of the method of the present invention results in further advantages. In particular, there is a reduced safety risk over the entire manufacturing process, since the reactive catalyst is only introduced during a very late process step, namely with or after production of the electrode layer. Furthermore, in one embodiment of the process according to the invention, the catalyst can be (almost) completely generated and any washing steps, in which catalyst discharge from the electrode layer is to be expected, can be omitted.

### DESCRIPTION OF THE FIGURES

**FIG. 1** shows a photograph of the electrode prepared via dropwise impregnation.
**FIG. 2** shows a photograph of the electrode prepared via planar impregnation according to the invention.
**FIG. 3** shows a light microscopy image of the electrode prepared via dropwise impregnation.
**FIG. 4** shows a light microscopy image of the electrode prepared via planar impregnation according to the invention.
**FIG. 5** shows a scanning electron microscopy (SEM) image of the electrode prepared via dropwise impregnation.
**FIG. 6** shows a scanning electron microscopy (SEM) image of the electrode prepared via planar impregnation according to the invention.
**FIG. 7** shows an energy dispersive X-ray spectroscopy (EDX) image of the electrode prepared via dropwise impregnation.
**FIG. 8** shows an energy dispersive X-ray spectroscopy (EDX) image of the electrode prepared via planar impregnation according to the invention.
**Fig. 9** is a diagram of voltage and current density output characteristics of the membrane electrode unit assemblies manufactured in Example 1 and Comparative Example 1.

### DETAILED DESCRIPTION OF THE INVENTION

As used in the present invention, the term "decomposition of the catalyst precursor" includes a chemically, electrochemically or thermally induced reduction of the catalyst precursor, but is not limited to this. In particular, this is also intended to cover the possible use of a Pt(0) precursor and the decomposition process that takes place in this respect, for example in connection with platinum deposition, as is frequently provided on the electrode layer forming the cathode for a fuel cell.

An essential feature of the method of the present invention is the application of the support particles and/or the catalyst precursor on the substrate via a two-dimensional, film-like application method.

In one embodiment of the invention, the support particles and the catalyst precursor are applied on the substrate via a two-dimensional, film-like application method. In this case, the electrode layer is produced from an electrode layer paste which contains the support particles and in which the catalyst precursor is already blended, wherein the electrode layer paste is applied on the substrate via the two-dimensional, film-like application method. This embodiment is advantageous from a process engineering point of view, since in this case the generation of the catalyst can take place simultaneously with the production of the electrode layer according to step (A), e.g. during a drying and/or tempering step for the electrode layer produced from the electrode layer paste, which may take place during the production of the electrode layer, thus ensuring a rapid process sequence. During such a drying and/or tempering step, the process steps of applying a liquid and/or gaseous reducing agent and/or an increased temperature to the electrode layer or carrying out an electrochemical process, which are explained in more detail below, can also be carried out simultaneously, for example. Preferably, care is taken to ensure that a period of no more than approx. 20 minutes elapses between the addition of the catalyst precursor to the electrode layer paste and the start of the subsequent generation process.

In one embodiment of the invention, the catalyst precursor is applied on the substrate via a two-dimensional, film-like application method. In this case, the electrode layer is impregnated with a solution containing the catalyst precursor only after its generation according to step (A), wherein the solution containing the catalyst precursor is applied on the substrate via the two-dimensional, film-like application method. In such an embodiment, the electrode layer can be formed (before impregnation with the catalyst precursor) from a carbon paste containing support particles and optionally a solvent and at least one additive such as an ionomer by common formation methods, such us using a slot-die, a rod or by spraying it on a substrate, followed by an optional drying step.

In this respect, it should be mentioned that the solution containing the catalyst precursor - as a result of the impregnation that only takes place after the electrode layer has been produced - can only penetrate into those areas of the electrode layer already produced in a previous step into which the process media of a fuel cell (or another chemical or electrochemical reactor) can also penetrate later, which means that the catalyst is only generated in useful places, which increases its usable yield. Furthermore, the impregnation of the electrode layer with the solution containing the catalyst precursor, which only takes place later, results in a higher degree of flexibility with regard to the composition of a paste forming the electrode layer, in which substances that may be harmful to the catalyst can also be used (e.g. substances that are not suitable for the catalyst). This means that substances which may be harmful to the catalyst (e.g. solvents) can be used, at least insofar as these volatilise by the time the electrode layer is produced, which means that they no longer pose a risk to the catalyst to be generated in the layer after the layer has been produced. The handling and storage of electrode layers produced in advance is also considerably easier in the absence of a catalyst or catalyst precursor.

The omission of a washing step according to an embodiment of the invention, which could cause the catalyst (or the catalyst precursor) to be discharged from the layer, can be carried out in particular because the impregnation of the electrode layer with a solution containing the catalyst precursor can be carried out preferably on very short time scales compared to the prior art. The actual impregnation of the electrode layer with the solution containing the catalyst precursor should advantageously, once started, take place continuously or within a specific period, e.g. between 1 second and 10 minutes.

The subsequent generation of the catalyst according to the invention (process step B) can then preferably begin immediately after impregnation of the electrode layer with the solution containing the catalyst precursor, whereby advantageously no more than 20 minutes, preferably only 0 - 5 minutes, should elapse between the end of impregnation and the start of catalyst generation and whereby washing steps can take place in between.

Since the impregnation step thus advantageously only takes place over a comparatively short period of time, undesired deposition of the catalyst precursor in ion-conducting channels of a cation exchange resin present in an electrode layer (e.g. a Nafion^{®} solution) can be largely avoided, since the ion exchange processes required for this take place over significantly longer time scales. A main generation of the catalyst in such channels, as is the case with e.g. according to DE 100 47 935 AI, does not take place in the present case.

In principle, in the context of the present invention, complete penetration of the electrode layer with the catalyst precursor can be achieved by subsequent impregnation of the electrode layer with the catalyst precursor - even with the aforementioned short impregnation times - which can be advantageous - particularly in the case of comparatively thin electrode layers with layer thicknesses of several I0 µm - but need not necessarily be the case. The impregnation is advantageously controlled in such a way that the catalyst precursor penetrates into the electrode layer to a depth of at least 1µm - 100 µm, preferably 1,5 - 50 µm, since even such deep layers of the electrode are catalytically active. Sufficient penetration depth can be achieved in the context of the present invention irrespective of whether the electrode layer is hydrophilic or hydrophobic by appropriate selection and/or treatment of its components. Even with an ultrahydrophobic electrode layer a sufficient penetration depth can be achieved, if a suitable solvent is selected.

Finally, the introduction or impregnation of the catalyst precursor into the electrode layer can be controlled in a targeted manner, for example by the electrode layer being impregnated with the solution containing the catalyst precursor in a targeted, inhomogeneous manner. This inhomogeneity relates on the one hand to a targeted control of the quantity of catalyst precursor-containing solution applied to the electrode layer per unit area, whereby a specifically adjustable catalyst concentration gradient can be generated over the surface and, if necessary, also the penetration depth of the electrode running perpendicular to this, if necessary with the additional use of suitable drying steps, which can promote the targeted, inhomogeneous distribution of the catalyst.

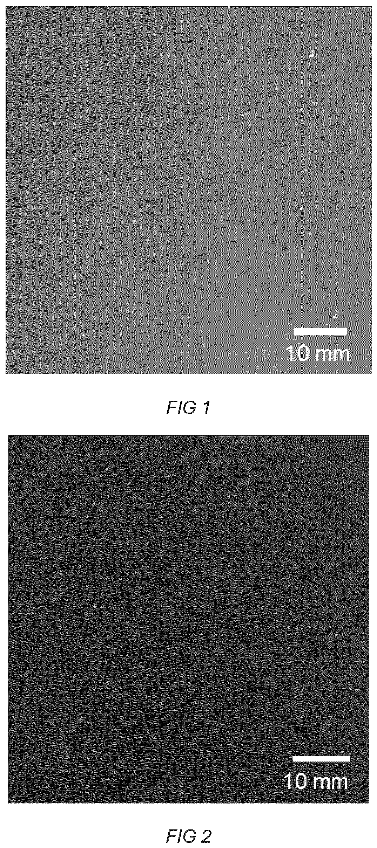

Two-dimensional application leads to a significantly more uniform / homogeneous application of the catalyst precursor within the electrode layer. Dripping and spraying leads (to varying degrees) to the formation of inhomogeneities on/in the electrode layer due to the drop/droplet form (e.g. due to local accumulation of impregnated particles or other components (such as ionomer) contained in the electrode layer, see Fig. 1-8 for platinum particles. The highly homogeneous distribution of the catalyst precursor, achieved by applying via a two-dimensional, film-like application method according to the present invention, paves the way for the possibility to impregnate electrode layers several times (with or without) an intermediate deposition/generation process, which offers the possibility of structuring nanoparticles (e.g. core-shell-like structure). This offers material-technical advantages (regarding performance and lifetime of the electrodes). In one embodiment of the invention, impregnation of the electrode layer with the catalyst precursor can be carried out as a single-step impregnation or as a multi-step impregnation. In case of multistep-impregnation, each impregnation step can be followed by generation of the catalyst as described herein. In each impregnation step, the catalyst precursor and/or the composition of the solution can be modified. For example, in each impregnation step a different metal is used, e.g. in a first impregnation step a Pt salt is used, while in a second impregnation step a Ru salt is used.

Applying the support particles and/or the catalyst precursor on the substrate via a two-dimensional, film-like application method has several surprising advantages. It allows a simple scaling in continuous processes, a uniform application, the use of a reduced application volume as well a more flexible media selection. Finally, it prevents the loss of impregnating solution due to mist or satellite drops as well as clogging and an energy input into the impregnation solution.

In the embodiments of the present invention, the electrode layer paste or the solution containing the catalyst precursor can be applied to the substrate or to the electrode layer, respectively, in a continuous manner with stationary coating means (such as a nozzle, doctor blade, rod etc.) with a continuously moving substrate or with continuously moving electrode layer on the substrate, respectively.

Useful two-dimensional, film-like application methods include slot-die coating, coating by doctor blade, rod coating, curtain coating, bead coating and roll coating. Preferred application methods use a slot-die or a doctor blade, more preferably a slot-die.

Slot-dies can be provided having different widths (i.e. orthogonal to the coating direction). The present invention is not limited to specific widths. From a technical point of view, slot-dies having a width of more than 7 m are feasible. In one embodiment, the slot die has a width of at least 1 mm, such as at least 10 mm, at least 5 cm, at least 10 cm, at least 30 cm, at least 50 cm, at least 1 m or at least 5 m. In one embodiment, the slot-die has a width from 1 mm to 10 m or from 1 cm to 5 m.

Slot-dies can further be provided having different depths (i.e. parallel to the coating direction). The depth to be used depends on the composition of the electrode layer paste and of the solution containing the catalyst precursor, respectively. It can vary between 0.05 mm and 1 mm.

In addition, the film-like application method can use one slot-die or more than one slot die. In case more than one slot die is used, the slot-dies can be arranged next to each other or behind each other (along the longitudinal axis of the substrate).

In more general terms, the solution containing the catalyst precursor or the electrode layer paste of the above explained embodiments is applied on the substrate in bands having a width of at least 1 mm. The present invention is not limited to specific band widths. In one embodiment, the solution containing the catalyst precursor or the electrode layer paste of the above explained embodiments is applied on the substrate in bands having a width of at least 1 mm, such as at least 10 mm, at least 5 cm, at least 10 cm, at least 30 cm, at least 50 cm, at least 1 m or at least 5 m. In one embodiment, the band has a width from 1 mm to 10 m or from 1 cm to 5 m. Bands of such width can be obtained with several two-dimensional film-like application methods as defined above. The selection of the band width is influenced by the intended application. That is, the size of the catalyst-containing electrode layer has an influence on the band width.

In a further embodiment of the method of the present invention, the solution containing the catalyst precursor or the electrode layer paste is applied on the substrate in bands having a thickness of 5 to 500 µm, preferably 10 to 300 µm.

In one embodiment of the method of the present invention, the solution containing the catalyst precursor has a concentration of the catalyst precursor in the range of 0.05to 70 wt%, preferably in the range of 0.52 to 50 wt%, based on the total weight of the solution. For example, for a solution of H₂PtCl₆ in 2-propanol, the concentration of the Pt salt lies in the range of 0.2 to 34 wt%.

In one embodiment of the method of the present invention, the solution containing the catalyst precursor has a viscosity in the range of 100 to 50000 mPa·s, preferably in the range of 500 to 10000 mPa·s, as determined at 25 °C and a shear rate of 1 s⁻¹ using a rotational rheometer. Generally, the depth of the slot-die must be compatible with the viscosity of the solution containing the catalyst precursor.

In a further embodiment, the electrode layer paste comprises
a. the support particles in an amount of 1 to 15 wt.%, preferably 2 to 10 wt.% based on the total weight of the electrode layer paste,
b. the catalyst precursor in an amount of 0.1 to 70 wt.%, preferably 0.5 to 30 wt.%, based on the total weight of the electrode layer paste.

To arrive at 100 wt%, the electrode layer paste contains a solvent and optionally one or more additives as defined above.

In one embodiment of the method of the present invention, the electrode layer paste has a viscosity in the range of 100 to 50000 mPa·s, preferably in the range of 5000 to 30000 mPa·s, as determined at 25 °C and a shear rate of 1 s⁻¹ using a rotational rheometer. Generally, the depth of the slot-die must be compatible with the viscosity of the electrode layer paste.

In a further embodiment of the present invention, application of the support particles and/or the catalyst precursor is carried out at a temperature in the range of 10°C to 180°C. In specific embodiments, the electrode layer paste or the solution containing the catalyst precursor is applied at a temperature in the range of 10°C to 180°C. Preferred temperatures are in the range of 15°C to 35°C.

With respect to both of the aforementioned embodiments of the method according to the invention, generation of the catalyst according to step (B) can be induced electrochemically, thermally and/or by a reducing agent in liquid or gaseous form in contact with the electrode layer, thereby decomposing the catalyst precursor. Thus, the term "decomposition of a catalyst precursor" as used herein means the generation of a catalyst from a catalyst precursor by different means, i.e. chemically, electrochemically or thermally.

Although in principle a purely thermally or purely chemically induced decomposition of the catalyst precursor can be carried out within the scope of the present invention, a combination of these two process steps, which can be carried out either simultaneously or one after the other, is an effective type of chemical generation, since it is supported by two different mechanisms of action.

A reducing agent is any chemical compound or composition by means of which the catalyst in question can be generated from the specific catalyst precursor by chemical reduction. Generally, the reducing agent is liquid or gaseous.

Suitable liquid reducing agents are, for example, solutions containing KBH₄, NaBH₄, LiALH₄, and/or N₂H₄. Suitable gaseous reducing agents are, for example, hydrogen, SO₂, CO, CH₄ and/or NH₃.

The use of liquid or gaseous reducing agents on an electrode layer that has already been produced - regardless of whether the catalyst precursor was already present in the electrode layer paste or was only applied to the electrode layer later in dissolved form - helps to ensure that the catalyst generation caused by the process according to the invention only takes place in those relevant areas of the electrode layer that are later also accessible to the process media of the fuel cell (or another chemical or electrochemical reactor). This is because the chemically induced generation only takes place in areas that are accessible to the reducing agent - and therefore also later to the process media.

A gaseous reducing agent, for example hydrogen, is preferred, as this can advantageously penetrate into the smallest interstices/pores of the electrode layer, whereby a widely ramified generation of the catalyst takes place even on the smallest support particles present in the electrode layer, which further improves the catalytically active surface of the catalyst layer produced. It should be noted that, in particular in the case of impregnation that only takes place after the electrode layer has been produced, it is in any case ensured that the catalyst precursor is only present where the catalyst precursor-containing solution can also penetrate, which is an important criterion for the efficiency of the corresponding chemically induced generation process with regard to the highest possible yield of catalytically active areas in the catalyst layer produced according to the invention.

If a gaseous reducing agent such as hydrogen is used, the easiest way to apply it is to expose the electrode layer - e.g. in a suitable sample chamber - to an atmosphere containing the gaseous reducing agent, which is a particularly simple and cost-effective way of exposing the electrode layer to an effective reducing agent. In addition to the gaseous reducing agent, such an atmosphere preferably contains only an inert gas, e.g. nitrogen or a noble gas, as a further component, unless it is formed 100% from the gaseous reducing agent. The proportion of reducing agent in such an atmosphere is preferably at least 20 wt.% or at least 30 wt.%. In case of hydrogen as reducing agent, the proportion of hydrogen in an inert gas is preferably at least 2 vol.% or at least 3 vol.%.

For thermally decomposing the catalyst precursor, the electrode layer in step (B) can be exposed to a temperature of from room temperature (= 20°C) to 400°C or more, particularly preferably to a temperature of from 50°C to 250°C, and again preferably from 100°C to 180°C. These temperature ranges prove to be useful both in terms of efficiency with regard to the desired reduction of the catalyst precursor and in terms of their harmlessness for the materials usually present in electrode layers produced according to the invention. The maximum temperature possible in this respect - without damaging the electrode layer - results from the temperature stability of the electrode layer or the components present in it. In the case of electrode layers containing Nafion^{®}, for example, temperatures of more than 180°C should be avoided in order to prevent decomposition of the Nafion^{®}, whereas temperatures of well over 400°C are possible in electrode layers containing Teflon for HT-PEM fuel cells without damaging the electrode layer.

It has been shown that in a process according to the invention with simultaneous application of temperature and reducing agent to the electrode layer, an adequate and efficient catalyst occupancy of the support particles present in the electrode layer can be realised in an unexpectedly short period of time. Thus, the electrode layer in step (B) can advantageously be exposed simultaneously to an atmosphere containing a gaseous reducing agent and a temperature in the range from 100°C to 180°C for a period of only about 0.1 to 30 minutes, in particular for a period of about 1 to 15 minutes, which is particularly advantageous for the industrial and cost-effective production of corresponding catalyst layers.

In one embodiment of the invention, generation of the catalyst and drying of the catalyst-containing electrode layer are carried out in a continuous manner in a conveyor oven.

In a further embodiment, the catalyst precursor in step (B) is decomposed to generate the catalyst by using an electrochemical method. An exemplary method is disclosed in WO 2008/104322 A2 which is enclosed herewith by reference. Generally, electrochemical decomposition of the catalyst precursor (contained in the electrode layer paste or the solution) occurs by an external electric current, an electric voltage or an electric field.

The electrode layer produced in step (A) of the method according to the invention is preferably produced from an electrode layer paste in which the support particles are mixed with solvent and/or at least one further component.

Carbon particles are particularly suitable as support particles, especially in the form of (industrial) carbon black, which can be in powder form or pulverised, for example.

However, support particles made of other materials, e.g. graphite, graphitised carbon black, TiO₂, tungsten carbide or titanium carbide, are also suitable in this respect. Furthermore, these can also take the form of carbon nanotubes, TiO₂ nanotubes, carbonised TiO₂ nanotubes. Also, physical mixtures of different support particles are suitable.

In one embodiment, the electrode layer paste comprises the support particles, a solvent and the catalyst precursor. Useful solvents include water and an alcohol. Organic solvent-based systems can also be used and slot-die coaters are often tailored for either organic or aqueous systems. Electrode layer pastes can include other additives including, but not limited to, surfactants, dispersants, defoamers, chelating agents, humectants and the like. Surfactants are also used to maintain the particles in suspension. Co-solvents, also known as humectants, are used to prevent the electrode layer paste from crusting and clogging the orifice of the application device, if needed. Biocides can also be added to prevent bacterial growth over time.

It is also particularly advantageous if the electrode layer paste has an electrolyte material, generally an ionomer, as a further component, which gives the electrode layer a certain proton conductivity (ionic conductivity). Useful ionomers are perfluorosulfonic acid (PFSA)-based ionomers, such as Nafion^{®} or a Nafion^{®} solution, and phosphoric acid-doped polybenzimidazole. Nafion^{®} is a brand name for a sulfonated tetrafluoroethylene-based fluoropolymer-copolymer. Surface-modifying substances, such as Teflon, or chemical binders can also be advantageously added to a suitable electrode coating paste.

Furthermore, in one embodiment of the invention the electrode layer is produced as a structured layer in that the support particles are composed inhomogeneously with regard to at least one particle property, such as material, shape, size or surface structure, or the electrode layer is structured by the use of templating or by other structuring processes, such as nanoimprint processes or the like.

With regard to the catalysts, the present invention is aimed in particular at the precious metal catalysts commonly used in fuel cells or other chemical or electrochemical reactors, such as platinum, ruthenium, palladium, iridium, rhodium, gold, silver, copper, alloys thereof (e.g. platinum alloys such as PtRu) or multi-metal structures thereof, which means that the catalyst precursors in question are preferably suitable precious metal salts.

The catalyst precursors used in a process according to the present invention for generation of a Pt, Ru or PtRu catalyst are, in a particularly advantageous manner, H₂PtCl₆, Pt(NO₃)₂, (NH₄)₂PtCl₆, Na₂PtCl₆, K₂PtC1₆, H₂Pt(OH)₆, PtO₂, PtCl₄, H₂Pt(SO₄)₂, [Pt(NH₃)₃NO₂]NO₂, RuCl₃, (NH₄)₃RuCl₆ or H₃RuCl₆ or bimetallic precursors, such as PtRu₅C(CO)₁₆ or Pt₂Ru₄(CO)₁₈, or mixtures thereof. For the generation of a gold catalyst, for example, HAuCl₄, (NH₄)₃Au(SO₃)₂ and/or K₃Au(SO₃)₂ can be used as a catalyst precursor. For rhodium generation Rh₂(SO₄)₃, RhCl₃ and/or Na₃RhCl₆ can be used as precursors. For silver generation, for example, Ag₂SO₄ or KAg(CN)₂ can be used and for copper generation CuSO₄ can be used. This list is not exhaustive, since other catalyst precursors, in particular for other possibly desired precious metals or metals (such as palladium, iridium, cobalt, nickel, tungsten, selenium, etc.) and/or (precious) metal alloys, in particular in the form of salts of the (precious) metals concerned, can also be used to carry out the process according to the invention without deviating from the technical teaching according to the invention. A mixture of catalyst precursors in the appropriate mixing ratio to the various alloy components can be used to deposit a precious metal alloy or a multi-metal structure acting as a catalyst.

The substrate which serves as a base for the electrode layer to be produced can advantageously be a gas diffusion layer for a fuel cell, a polymer electrolyte membrane or another film-like or fabric-like substrate. In particular, using the method according to the invention, a catalyst precursor-free electrode layer can first be produced with method step (A), which is easy to handle and can also be stored over a longer period of time without any loss of quality. In this case, the process step (B) according to the invention can therefore also be carried out at a considerable time interval from process step (A), for which purpose the electrode layer produced must first be impregnated with a solution containing a catalyst precursor. This impregnation is carried out via a two-dimensional, film-like application method, contrary to WO 2011/054500 A1 which discloses impregnation by dripping or spraying on the solution.

### EXAMPLES

In the following, an illustrative example of a process according to the invention is explained using the production of catalyst layers for the cathode side and anode side of a low-temperature polymer electrolyte fuel cell in which platinum is used as a catalyst.

### Example 1

In this respect, a standard gas diffusion layer (GDL) served as the substrate. A water and 1-propanol based paste containing a set amount of carbon black (Vulcan^{®} XC 72R) and a PFSA-based proton-conducting ionomer (725EW by 3M)(6.1% by weight (wt.%) carbon black and 4.2% by weight ionomer for the cathode layer and 2.3% by weight (wt.%) carbon black and 2.8% by weight ionomer for the anode layer) was applied to this by means of a slot-die coating process using a slot-die with a T-shaped, half circle manifold from the company infinityPV ApS. The wet layer thickness was 73 µm for the cathode and 142 µm for the anode (wet film thickness is equal to the applied volume per area given below) resulting in a dry layer thickness customary for electrode layers. The propanol: water ratio was 2.2:1.0 for the cathode and 4.7:1.0 for the anode. The viscosities of these pastes were 1000 mPa*s (for the cathode) and 9000 mPa*s (for the anode) as determined at 25 °C and a shear rate of 1 s⁻¹ using a rotational rheometer.

The conditions of the slot-die process were as follows:

| **Cathode** | |
|---|---|
| Slot opening | 0.25 mm |
| Coating width | 150 mm |
| Web speed | 0.41 m/min |
| Applied volume per area | 73.2 mL/m² |
| Distance to substrate | 0.2 mm |

| **Anode** | |
|---|---|
| Slot opening | 0.25 mm |
| Coating width | 150 mm |
| Web speed | 0.21 m/min |
| Applied volume per area | 142.9 mL/m² |
| Distance to substrate | 0.12 mm |

The carbon black particles present in the electrode layer paste or the electrode layer produced from it thus served as support particles for the platinum to be generated on it in a subsequent process step.

The electrode layer, which was already dry, was then impregnated by application of 60 mL/m² of an alcohol containing - and thus wetting - solution (3 parts 1-propanol mixed with 20 parts water by volume), which contained H₂PtCl₆ as a platinum precursor with a platinum content of 5.6% by weight for the preparation of the cathode and 2.0% platinum by weight for the anode via a slot-die with a web speed of 0.50 m/min and an applied wet film thickness of 60 µm. The slot-die had an application width of 135 mm and a slot opening of 100 µm and was positioned perpendicular in respect to the substrate with 0.3 mm between the lip of the slot-die and the substrate.

After impregnation of the electrode layer with the catalyst-containing precursor solution the electrode layer was heated to 140 °C in a suitable sample chamber for 14 minutes in a hydrogen-containing atmosphere. The atmosphere consisted of 100% hydrogen. This converted the platinum precursor into finely dispersed metallic platinum, which was generated on the carbon black of the electrode layer, i.e. was then fixed there.

The gas diffusion layers obtained in this way, with catalyst-containing electrode layers, were then further processed together with a polymer electrolyte membrane - to be arranged between the two catalyst layers - and hotpressing them together to form a membrane electrode unit assembly.

### Comparative Example 1

A membrane electrode unit assembly was manufactured by performing the same manufacturing process as in Example 1 except that the impregnation was performed dropwise via jetting of the H₂PtCl₆-containing solution. The same substrates, as well as the same solutions and with the same applied volume per area as in Example 1 were used.

### Experimental Example 1: Observation of manufactured electrodes

The cathode manufactured in Example 1 and Comparative Example 1 were evaluated by light microcopy, scanning electron microscopy (SEM) and energy dispersive X-ray spectroscopy (EDX).

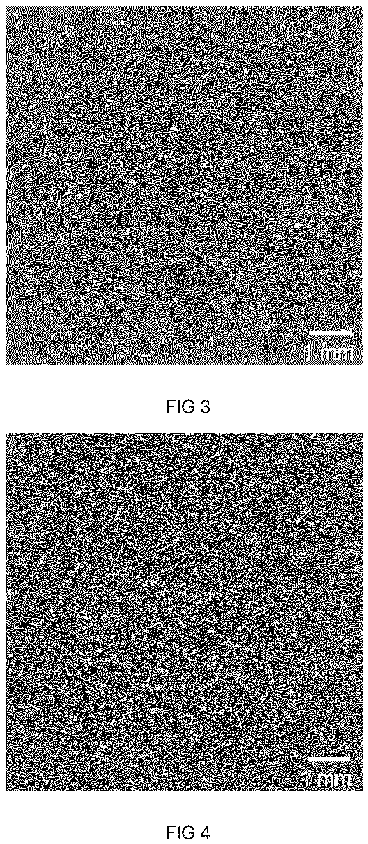

The photograph in FIG 1 and the light microscopy depicted in FIG 3 for the electrode prepared via dropwise impregnation shows a droplet pattern. The cathode electrode prepared via planar impregnation does not show the same pattern but shows a uniform appearance over the full area of the electrode as depicted in FIG 2 and FIG 4. Microscopy images were taken on a VHX-7000 from Keyence with 150x magnification and several images were stitched together.

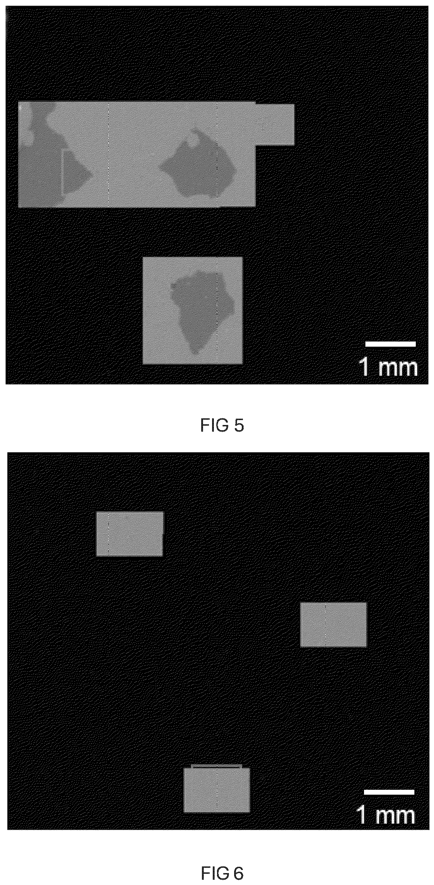

The SEM observations of the electrode prepared via dropwise impregnation in FIG 5 show an uneven pattern while the electrode prepared via planar impregnation show an even appearance of the electrode as depicted in FIG 6. The position of the measured areas in FIG 5 and FIG 6 match to their respective positions in FIG 3 and FIG 4. SEM measurements were performed on an Apreo S by the Thermo Fisher with 250x magnification. Several images were stitched together. The voltage was set to 2 kV and current to 13 pA.

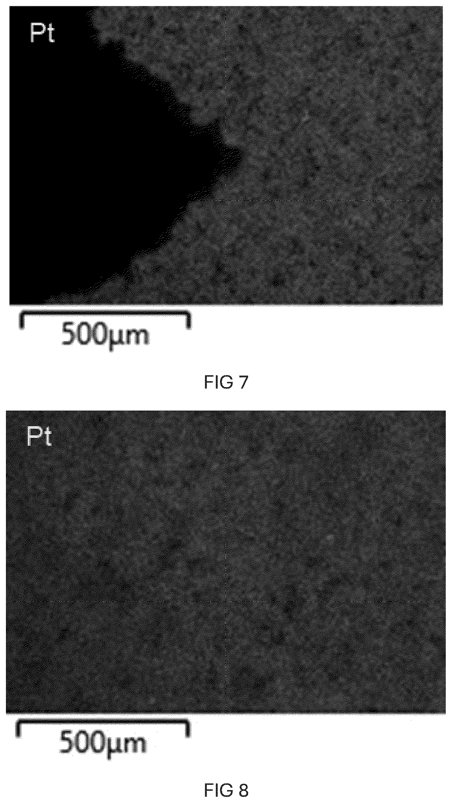

Further, the EDX measurements as shown in FIG 7 confirm that the pattern observed for the electrode prepared via dropwise impregnation corresponds to an uneven distribution of Platinum metal over the area of the electrode, leaving some areas without Platinum and therefore non-active in the electrochemical reactions taking place in the fuel cell. The EDX measurement of the electrode prepared via planar impregnation as shown in FIG 8 shows no such uneven distribution and the full area of the electrode is treated with Platinum. The boxes in FIG 5 and FIG 6 indicate the position of the EDX measurements depicted in FIG 7 and FIG 8 respectively. EDX mapping was recorded with a ULTIM MAX 65 detector by Oxford Instruments and a voltage of 15kV.

### Experimental Example 2: Performance evaluation of manufactured electrodes

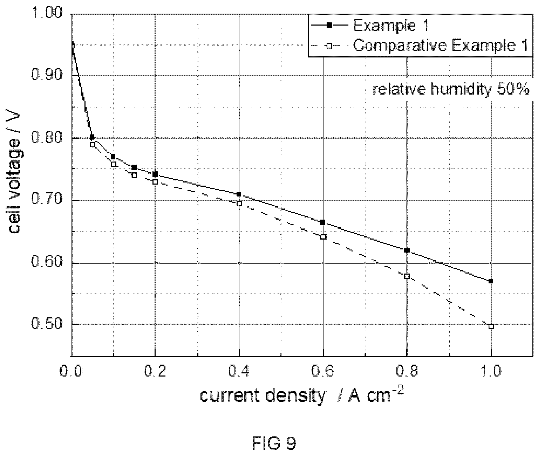

Voltage and current density output characteristics of the membrane electrode unit assemblies manufactured in Example 1 and Comparative Example 1 were evaluated and are depicted in FIG 9. The membrane electrode unit assembly manufactured in Example 1 shows improved performance in respect to the membrane unit assembly manufactured in Comparative Example 1. The performance improvement becomes more pronounced at higher current density.

## Claims

1. A method for the manufacture of a catalyst-containing electrode layer on a substrate comprising the following steps:
(A) generating an electrode layer on the substrate, wherein the electrode layer contains support particles for the catalyst to be generated thereof;
and simultaneously or subsequently:
(B) generating the catalyst on at least one part of the support particles present in the electrode layer generated according to step (A) with decomposition of a catalyst precursor present in the electrode layer and not merely at the surface,
wherein the support particles and/or the catalyst precursor is/are applied on the substrate via a two-dimensional, film-like application method.

2. The method according to claim 1, wherein the electrode layer is produced from an electrode layer paste, which contains the support particles and in which the catalyst precursor is already blended, wherein the electrode layer paste is applied on the substrate via the two-dimensional, film-like application method.

3. The method according to claim 1, wherein the electrode layer is impregnated with a solution containing the catalyst precursor only after its generation according to step (A), wherein the solution containing the catalyst precursor is applied on the substrate via the two-dimensional, film-like application method.

4. The method according to any one of claims 1 to 3, wherein the two-dimensional, film-like application method uses a slot-die or a doctor blade.

5. The method according to claim 4, wherein the slot-die has a width of at least 1 mm.

6. The method according to any one of claims 2 to 5, wherein the solution containing the catalyst precursor or the electrode layer paste is applied on the substrate in bands having a width of at least 1 mm.

7. The method according to any one of claims 2 to 6, wherein the solution containing the catalyst precursor or the electrode layer paste is applied on the substrate in bands having a thickness of 5 to 500 µm.

8. The method according to any one of claims 2 to 7, wherein the solution containing the catalyst precursor has a concentration of the catalyst precursor in the range of 0.05 to 70 wt%, based on the total weight of the solution.

9. The method according to any one of claims 2 to 8, wherein the solution containing the catalyst precursor has a viscosity in the range of 100 to 50000 mPa·s, as determined at 25 °C and a shear rate of 1 s⁻¹ using a rotational rheometer.

10. The method according to any one of claims 2 to 9, wherein the catalyst precursor comprises H₂PtCl₆, Pt(NO₂)₃, (NH₄)₂PtCl₆, Na₂PtCl₆, K₂PtCl₆, H₂Pt(OH)₆, PtO₂, PtCl₄, H₂Pt(SO₄)₂, [Pt(NH₃)₃NO₂]NO₂, RuCl₃, (NH4)₃RuCl₆, H₃RuCl₆, HAuCl₄, (NH₄)₃Au(SO₃)₂, K₃Au(SO₃)₂, Rh₂(SO₄)₃, RhCl₃, Na₃RhCl₆,Ag₂SO₄, KAg(CN)₂ or CuSO₄ or bimetallic precursors such as PtRu₅C(CO)₁₆ or Pt₂Ru₄(CO)₁₈, or mixtures thereof.

11. The method according to any one of claims 2 to 7, wherein the electrode layer paste comprises the support particles, a solvent and the catalyst precursor.

12. The method according to any one of claims 2 to 7 and 11, wherein the electrode layer paste comprises
a. the support particles in an amount of 1 to 15 wt.%, based on the total weight of the electrode layer paste
b. the catalyst precursor in an amount of 0.1 to 70 wt.%, based on the total weight of the electrode layer paste.

13. The method according to any one of claims 2 to 7, 11 and 12, wherein the electrode layer paste has a viscosity in the range of 100 to 50000 mPa·s, as determined at 25 °C and a shear rate of 1 s⁻¹ using a rotational rheometer.

14. The method according to any one of claims 1 to 13, wherein application of the support particles and/or the catalyst precursor is carried out at a temperature in the range of 10°C to 180°C.

15. A catalyst-containing electrode layer prepared by the method of any one of claims 1 to 14.
